# EUROPÄISCHE PATENTSCHRIFT

(11) **EP 3 219 465 B1**
(45) Veröffentlichungstag und Bekanntmachung des Hinweises auf die Patenterteilung: **15.04.2020**
(21) Anmeldenummer: 17159452.6
(22) Anmeldetag: 06.03.2017
(51) Int. Cl.: B29C 65/20, B29C 65/78, B29L 31/00

(54) **VORRICHTUNG UND VERFAHREN ZUM VERSCHWEISSEN VON AUF GEHRUNG GESCHNITTENEN RAHMENPROFILEN AUS KUNSTSTOFF**
DEVICE AND METHOD FOR WELDING MITRE CUT PLASTIC FRAME PROFILES
DISPOSITIF ET PROCÉDÉ DE SOUDAGE DE PROFILÉS DE CADRE EN PLASTIQUE DÉCOUPÉS EN ONGLET

(30) Priorität: 14.03.2016 DE 102016104588
(43) Veröffentlichungstag der Anmeldung: 20.09.2017
(73) Patentinhaber: SCHÜCO International KG, 33609 Bielefeld (DE)
(72) Erfinder: VALENTIN, Manfred, 32547 Bad Oeynhausen (DE)
(74) Vertreter: Specht, Peter

(56) Entgegenhaltungen:
- EP-A1- 0 947 302
- DE-A1- 19 753 846
- DE-C1- 19 545 480

## Beschreibung

Die Erfindung betrifft eine Vorrichtung nach dem Oberbegriff des Anspruchs 1 und ein Verfahren, mit dem jeweils auf Gehrung geschnittene Rahmenprofile aus Kunststoff mit eingesetzten Dichtungen miteinander verschweißt werden. Solche Vorrichtungen und Verfahren werden hauptsächlich eingesetzt, um Rahmenprofile zu Blend- und Flügelrahmen zusammenzufügen, um daraus Türen und Fenster herzustellen.

Aus der EP 0 838 324 A2 ist ein Verfahren zum Verschweißen von auf Gehrung geschnittenen Rahmenprofilen aus Kunststoff mit eingezogenen Dichtungen bekannt, bei dem jeweils zwei Kunststoffprofile und zwei Dichtungen jeweils an einer Gehrungsfläche miteinander verschweißt werden. Durch Formteile werden dabei die Dichtungen auch im Eckbereich weitgehend elastisch gehalten. Dieses Verfahren ist für Dichtungen aus schweißbarem Kunststoff einsetzbar.

Es hat sich jedoch herausgestellt, dass nicht schweißfähige Dichtungen aus einem elastomeren Werkstoff, wie z.B. auf der Basis von Chlorbutadien-Kautschuk (CR) - auch unter dem Handelsnamen Neopren bekannt- oder auf der Basis von Ethylen-Propylen-Dien-Kautschuk (EPDM), auf Dauer bessere Rückstellkräfte und damit bessere Dichtungseigenschaften aufweisen als schweißbare thermoplastische Dichtungen.

In der EP 1 072 392 A1 werden ein Verfahren und eine Vorrichtung zum Verschweißen von auf Gehrung geschnittenen Rahmenprofilen aus Kunststoff beschrieben. Dabei ist vorgesehen, dass die Gehrungsflächen und die benachbarten Rahmenprofilbereiche zunächst durch eine Heizeinrichtung auf die Verschweißungstemperatur aufgeheizt werden. Danach wird die Heizeinrichtung aus dem Bereich der Gehrungsflächen entfernt und die Gehrungsflächen der Rahmenprofile werden zusammengepresst und verschweißt. Dabei bestehen die Dichtungen aus einem elastischen Kunststoff, wie Neopren, EPDM, Gummi oder einem anderen Elastomer. Die Dichtungen werden im Bereich der Gehrungsflächen beim Zusammenfügen der Rahmenprofile jeweils in Längsrichtung des Rahmenprofils verschoben. Sie sind dann aber im Gehrungsbereich nicht miteinander verschweißt. Es besteht vielmehr ein Spalt, so dass die Dichtigkeit im Eckbereich weiter zu optimieren ist.

Die EP 0 947 302 A1 offenbart ein Verfahren und eine Vorrichtung zum Verschweißen von Rahmenprofilen zu einem Rahmen, wobei die zu fügenden Rahmenprofile auf Gehrung geschnitten sind. Gleichzeitig werden beim Schweißvorgang die in den Rahmenprofilen befindlichen Dichtungen zusammengeführt und miteinander verschweißt. Dieses Verfahren eignet sich aufgrund der verwendeten Vorrichtung, deren Klemmstücke zur Fixierung der Dichtungen federnd gelagert sind, insbesondere für die in der Patentschrift beschriebenen Dichtungen aus thermoplastischen Kunststoffen, im speziellen thermoplastische Kunststoffe, die einen Kunststoffschaumkern aufweisen, der von einer stabilisierenden thermoplastischen Kunststoffhaut umschlossen ist. Durch die federnde Lagerung kompensieren die Klemmstücke den Verschiebeweg des Fügevorgangs der Rahmenprofile bzgl. der eingelegten Dichtungen, so dass diese beim Verschweißvorgang nicht aufeinander geschoben werden und dabei ein voluminöser Grat oder Wulst an der Fügestelle der Dichtungen entsteht. Um die Funktion der federnden Klemmstücke einwandfrei zu erfüllen, ist es erforderlich, die Dichtungen gegen Verschieben durch eine entsprechend ausgeformte Kontur an den Klemmstücken zu fixieren und in der Position zu halten, bis der Verschweißvorgang abgeschlossen ist.

Die DE 197 53 846 A1 zeigt eine Vorrichtung und ein Verfahren zum Fügen von Hartkunststoffhohlprofilen, wie sie bei der Herstellung von Fenstern und Türen aus Kunststoff benötigt werden. Zur Hemmung der Bildung von Schweißraupen der Hartkunststoffprofile beim Fügevorgang, insbesondere an den Fügepositionen der Anschlagdichtungen, werden an den an diesen Stellen anliegenden Anschlagleisten federrückgestellte bewegliche Profilschienen eingebracht, die durch ihre gegenüber den Anschlagleisten hervorstehende Kontur die Eigenschaft besitzen, die beim Fügevorgang auftretenden Schweißraupenbestandteile im Bereich der Dichtungen durch einen darunter befindlichen Hohlraum abzuführen und somit von den Anschlagdichtungen fernzuhalten. Somit werden diese vor Beschädigungen durch die Schweißraupen geschützt. Dabei reicht der vorhandene Fügehub aus, um die in der Fügezone der Hartkunststoffprofile befindlichen Anschlagdichtungen, die aus Elastomeren bestehen, ebenfalls zu fügen. Um ein Verschieben der Anschlagdichtungen beim Fügevorgang zu vermeiden, werden diese beim Anlegen der Anschlagleisten durch diese und durch die Profilschienen derart gegen die Hartkunststoffhohlprofile gedrückt, dass sie sich den Außenkonturen der berührenden Teile anpassen und dementsprechend unverrutschbar festgeklemmt sind.

Die DE 195 45 480 C1 offenbart ein Verfahren und eine Vorrichtung zum Fügen von Kunststoffrahmen aus Hart - PVC zusammen mit Dichtsträngen aus Plastomeren. Ziel der Erfindung ist das gemeinsame Verschweißen von Rahmen und Dichtung in einem Arbeitsgang unter dem Aspekt der Vermeidung von Materialeintritt des an der Fügestelle plastifizierten Rahmens in den Dichtungsbereich. Erfindungsgemäß wird diese Anforderung dadurch gelöst, dass die in der Fügezone der Rahmenteile befindlichen Dichtungen durch geeignete, an den Rahmenteilen angebrachte Konturelemente derart umschlossen werden, dass die Dichtungen in ihrer Lage durch diese fixiert werden. Zudem sind die Konturelemente so ausgestaltet, dass sie keinen Materialfluss der plastifizierten Rahmenteile in den Dichtungsbereich zulassen. Gleichzeitig dienen die Konturelemente mit ihren der Fügezone zugewandten Körperkanten als Endanschlag für den Fügeprozess.

Die Aufgabe der vorliegenden Erfindung liegt darin, eine Vorrichtung und ein Verfahren der gattungsgemäßen Art so weiterzuentwickeln, dass das Problem der übermäßigen Wulstbildung bei der Verschweißung von Profilrahmen und Rahmendichtungen gemindert wird.

Diese Aufgabe wird in Hinsicht auf die Vorrichtung durch den Gegenstand des Anspruchs 1 gelöst und in Hinsicht auf das Verfahren durch den Gegenstand des Anspruchs 9.

Nach Anspruch 1 wird eine Vorrichtung geschaffen, mit der jeweils auf Gehrung geschnittene Rahmenprofile und in die Rahmenprofile eingesetzte, sich längs der Rahmenprofile erstreckende Dichtungen miteinander im Gehrungsbereich verschweißbar sind, wobei die Rahmenprofile aus Kunststoff bestehen und wobei die Dichtungen aus einem elastischen Kunststoffwerkstoff bestehen und mindestens einen Dichtbereich aufweisen, mit zwei Aufnahmen, in denen jeweils eines der Rahmenprofile mit mindestens einer der Dichtungen gehalten ist, mit einer Heizeinrichtung zum Aufheizen der Rahmenprofile und der Dichtungen auf Schweißtemperatur, wobei an jeder Aufnahme ein einstückig mit dieser oder separat zu dieser ausgebildeter Dichtungs-Halteabschnitt zum Halten jeweils einer der Dichtungen vorgesehen ist, und wobei der Dichtungs-Halteabschnitt eine Seitenwand zur Anlage und zur Vorpositionierung und/oder Vorkomprimierung der Dichtung aufweist. Die Vorrichtung zeichnet ferner sich dadurch aus, dass die Seitenwand einen Vorstand, insbesondere eine Aufdickung, aufweist, die in einer Richtung M senkrecht zu einer Haupterstreckungsrichtung L des jeweiligen Rahmenprofils von der Seitenwand vorsteht, wobei sich der Vorstand, insbesondere die Aufdickung, des Dichtungs-Halteabschnittes ausgehend von der Gehrungsnaht entlang der Profillängsachse über 1,5 mm bis 80 mm erstreckt und einer oder beide Dichtungs-Halteabschnitte als an der Aufnahme befestigte Zulage ausgebildet ist/sind, wobei die Zulagen in Längsrichtung des zugehörigen Rahmenprofils auf der Aufnahme justierbar sind und ansonsten fest auf der Aufnahme fixiert sind. Durch ein hierdurch bedingtes Drücken der Dichtung wird das Dichtungsmaterial beim Verschweißen außerhalb des vor dem Verschweißen vorhandenen Dichtungsquerschnitts zu einem geometrisch definierten, entfernbaren Schweißüberstand gedrückt. Dieser Schweißüberstand ist entfernbar und wird vorzugsweise entfernt, derart, dass die zusammengeschweißten Dichtungen dort, wo der Schweißüberstand entfernt worden ist, eine Dichtecke mit geschlossener Außenkontur ausbilden. Die vor dem Verschweißen gegebene Querschnittsgeometrie der Dichtungen bleibt auch im Gehrungsbereich und im Bereich der Verschweißung weitestgehend erhalten. Derart wird eine vorteilhafte Optik erreicht und im Bereich der Ecke auch eine gute Dichtfunktion realisiert.

Es hat sich als zweckmäßig und damit für ein besonders gutes Verschweißungsbild der Dichtung vorteilhaft erwiesen, wenn sich der Vorstand, über 1,5 bis 30 mm erstreckt und/oder wenn der Vorstand, insbesondere die Aufdickung, des Dichtungs-Halteabschnittes eine Dicke zwischen 0,15 mm und 3 mm, vorzugsweise zwischen 0,4 mm und 1,5 mm aufweist.

Ein vorzugsweise vorgesehener Befestigungsfuß der jeweiligen Dichtungen kann beispielsweise als vorstehender Fuß mit Hinterschnitten ausgebildet sein oder aber als eine Nut zum Aufsetzen auf einen Steg eines Profils. Die Dichtung kann aus einem oder mehreren Materialien bestehen. Die Dichtung kann jeweils auch direkt als Dichtbereich an das jeweilige Profil anextrudiert sein. Der Fußbereich der jeweiligen Dichtung ist dann der Übergangsbereich der Dichtung, der direkt an das Kunststoffmaterial des Profils angrenzt.

Nach einer vorteilhaften Variante kann jeder Dichtungs-Halteabschnitt jeweils im Bereich einer Gehrungsfläche mit einer Abschrägung versehen sein, die einer Aufnahmekontur des Dichtungs-Halteabschnittes für das Rahmenprofil folgt. Dabei ist es weiter vorteilhaft, wenn die Abschrägung zwei Abschrägungsflanken aufweist.

Es ist weiter vorteilhaft, wenn die Abschrägungsflanken so zueinander angeordnet sind, dass sie in Bezug auf eine Vorderwand des Dichtungs-Halteabschnittes eine vorzugsweise vertiefte, prismenartige Abschrägungsgeometrie bilden.

Die Erfindung schafft auch ein Verfahren, mit dem jeweils auf Gehrung geschnittene Rahmenprofile und in die Rahmenprofile eingesetzte, sich längs der Rahmenprofile erstreckende Dichtungen miteinander in einem Gehrungsbereich unter einem Gehrungswinkel mit einer Vorrichtung nach einem der Ansprüche 1 bis 8 verschweißt werden, wobei die Rahmenprofile aus einem elastischen Kunststoffwerkstoff bestehen und die Dichtungen vorzugsweise einen Befestigungsfuß und mindestens einen Dichtbereich aufweisen, wobei das Verfahren zumindest folgende Schritte aufweist:
- Bereitstellen einer Vorrichtung nach einem der Ansprüche 1 bis 8,
- Bereitstellen der zwei Rahmenprofile mit den zwei daran angeordneten Dichtungen und Anordnen der zwei Rahmenprofile auf der Vorrichtung,
- Aufheizen der Gehrungsflächen der Rahmenprofilbereiche durch eine Heizeinrichtung auf eine Verschweißungstemperatur und Aufheizen der Gehrungsflächen der Dichtungen,
- Entfernen der Heizeinrichtung aus dem Bereich der Gehrungsflächen,
- Zusammenpressen und Verschweißen der Gehrungsflächen der Rahmenprofile,
- Verschweißen der Dichtungen durch ein Aufeinanderpressen der Querschnittsoberflächen der Dichtungen, wobei die Dichtungen jeweils durch eine Seitenwand eines Dichtungs-Halteabschnitts senkrecht zur Haupterstreckungsrichtung L der Rahmenprofile vorpositioniert und/oder vorkomprimiert werden,
- wobei das Dichtungsmaterial vom Verschweißungsquerschnitt der jeweiligen Dichtung durch einen Vorstand, insbesondere eine Aufdickung, senkrecht zur Haupterstreckungsrichtung L vorkomprimiert wird oder ergänzend zur Seitenwand komprimiert wird,
- so dass während des Verschiebens der Rahmenprofile aufeinander zu das Dichtungsmaterial vom Verschweißungsquerschnitt der jeweiligen Dichtung in Richtung einer Winkelhalbierenden des Gehrungswinkels nach außen gedrückt wird.

Es ergibt sich wiederum, dass das Dichtungsmaterial außerhalb des Dichtungsquerschnittes - wie er vor der Verschweißung gegeben ist bzw. definiert ist - zu einem geometrisch definierten, entfernbaren Schweißüberstand gedrückt wird. Dadurch kann der Schweißüberstand einfach z.B. mit Handwerkzeugen abgetrennt werden, ohne dabei die Dichtwirkung der Dichtungen zu beeinträchtigen. Dann ist es vorteilhaft, wenn der Schweißüberstand derart entfernt wird, dass die im Gehrungsbereich zusammengeschweißten Dichtungen dort, wo der Schweißüberstand entfernt worden ist, eine Dichtecke mit geschlossener Außenkontur ausbilden.

Nach einer Variante weisen die Dichtungen wenigstens einen Hohlraum auf. Vorzugsweise weisen sie ferner einen Befestigungsfuß auf. Dann ist es vorteilhaft möglich, dass das Verschweißen der Dichtungen derart erfolgt, dass im Gehrungsbereich der Hohlraum der Dichtung - quasi über Eck - erhalten bleibt und nicht oder nicht vollständig zusammengedrückt wird.

Es entsteht dadurch eine Gehrungsverschweißung der Dichtungen mit einer vorteilhaft verbesserten Dichtwirkung im Gehrungsbereich sowie mit einem geometrisch definierten Schweißüberstand, der dadurch definiert und einfach entfernbar ist.

Ebenfalls vorteilhaft ist, dass die Schweißung der erwärmten Dichtung im Wesentlichen oder sogar nur durch das Aufeinanderpressen der Querschnittsoberflächen der Dichtungen erfolgt. Dadurch ergibt sich beim Verschweißen der Dichtungen im Zusammenspiel mit dem gewählten Werkstoff der Dichtungen vorteilhaft eine Verschweißung ohne eine tiefgehende Verschmelzung oder gar Abbrand der Dichtungen.

Nach einer bevorzugten Ausführungsvariante des erfinderischen Verfahrens ist vorgesehen, dass der elastische Kunststoffwerkstoff der Dichtungen ein Elastomer auf der Basis von Chlorbutadien-Kautschuk (CR) oder auf der Basis von Ethylen-Propylen-Dien-Kautschuk (EPDM) oder einem Elastomer auf der Basis eines anderen Kautschuks ist. Dadurch wird der Vorteil von dauerhaft besseren Elastizitäts- und damit dauerhaft besseren Dichtungseigenschaften dieser Werkstoffe im Vergleich zu thermoplastischen Elastomeren (TPE) genutzt. Dabei sind in den elastischen Kunststoffwerkstoff Bereiche aus einem zweiten, thermoplastischen und damit verschweißbaren Kunststoffwerkstoff integriert. Dadurch ist vorteilhaft für eine bessere Verschweißbarkeit der Dichtungen gesorgt.

Vorteilhaft ist, dass im Gehrungsbereich ein Hohlraum der Dichtung erhalten bleibt und nicht vollständig zusammengedrückt wird. Dadurch bleiben die Elastizität und damit die Dichtwirkung der Dichtung auch im Gehrungsbereich erhalten.

Weitere vorteilhafte Ausführungen der Erfindung können den Unteransprüchen entnommen werden.

Die Erfindung wird nachfolgend anhand eines Ausführungsbeispiels mit Bezug auf die beigefügten Zeichnungen näher erläutert. Es zeigt:
- Figur 1:: eine räumliche Darstellung von zwei Aufnahmen einer erfindungsgemäßen Vorrichtung, die sich in Schweißposition befinden, wobei die Rahmenprofile und ein Schweißspiegel zur besseren Übersichtlichkeit nicht dargestellt sind;
- Figur 2a:: eine räumliche Darstellung einer ersten Aufnahme nach Fig. 1;
- Figur 2b:: eine räumliche Darstellung einer Dichtungs-Halteabschnitt, wobei angrenzende Teile, wie z.B. eine Aufnahme nicht dargestellt sind;
- Figur 2c:: eine räumliche Darstellung einer zweiten Aufnahme nach Fig. 1;
- Figur 3:: eine Schnittdarstellung einer Aufnahme mit einem eingelegten Rahmenprofil;
- Figur 4:: eine Schnittdarstellung einer Aufnahme mit einem eingelegtem Rahmenprofil nach dem Entfernen der Heizeinrichtung;
- Figur 5a:: eine räumliche Darstellung einer geschweißten Verbindung zweier Rahmenprofile;
- Figur 5b:: eine Ausschnittsvergrößerung aus der Fig. 5a, bei der die verschweißte Dichtung gut sichtbar dargestellt ist;
- Figur 6:: einen ersten Verfahrensschritt eines Verfahrens nach dem Stand der Technik, bei dem Rahmenprofile aufgeheizt werden;
- Figur 7:: einen zweiten Verfahrensschritt des Verfahrens nach dem Stand der Technik am Anfang des Zusammenfügens der zwei Rahmenprofile;
- Figur 8:: die zusammengefügten Rahmenprofile nach Abschluss des Verfahrens nach dem Stand der Technik;
- Figur 9:: eine vergrößerte Draufsicht auf zwei Rahmenprofile vor dem Zusammenfügen nach dem Stand der Technik;
- Figur 10:: eine Vorderansicht auf eine Gehrungsfläche des Rahmenprofils vor dessen Auflegen auf die Aufnahme der Vorrichtung nach dem Stand der Technik;
- Figur 11:: eine Vorderansicht der Vorrichtung nach dem Stand der Technik mit eingefügtem Rahmenprofil;

Bei dem Verfahren nach dem Stand der Technik der EP 1 072 392 A1 wird in einem ersten Verfahrensschritt ein auf Gehrung geschnittenes Rahmenprofil 100a mit einer eingezogenen äußeren Dichtung 102, die in einer Verankerungsnut 103 in dem Rahmenprofil 100a aufgenommen ist, und mit einer inneren Dichtung 104, die in einer inneren Verankerungsnut 105 eingezogen ist, in Kontakt mit einem Schweißspiegel 106 gebracht. Auf der anderen Seite des Schweißspiegels 106 ist ebenfalls ein auf Gehrung geschnittenes Rahmenprofil 100b vorgesehen, in dem Dichtungen 102 und 104 eingezogen sind.

Die Dichtungen 102 und 104 nach dem Stand der Technik sind vorzugsweise aus einem elastischen Kunststoffwerkstoff, wie z.B. einem Elastomer auf der Basis von Chlorbutadien-Kautschuk (CR) -auch unter dem Handelsnamen Neopren bekannt- oder auf der Basis von Ethylen-Propylen-Dien-Kautschuk (EPDM) oder einem Elastomer auf der Basis eines anderen Kautschuks hergestellt. Der Werkstoff der Dichtungen ist dabei so gewählt, dass beim Erhitzen der Dichtungen 102, 104 und der Rahmenprofile 100a, 100b auf Schweißtemperatur keine Verklebungen mit dem Schweißspiegel 106 auftreten. Nach der EP 1 072 392 A1 sind die jeweiligen Dichtungen 102, 104 somit vollständig aus nicht schweißfähigem Material gebildet.

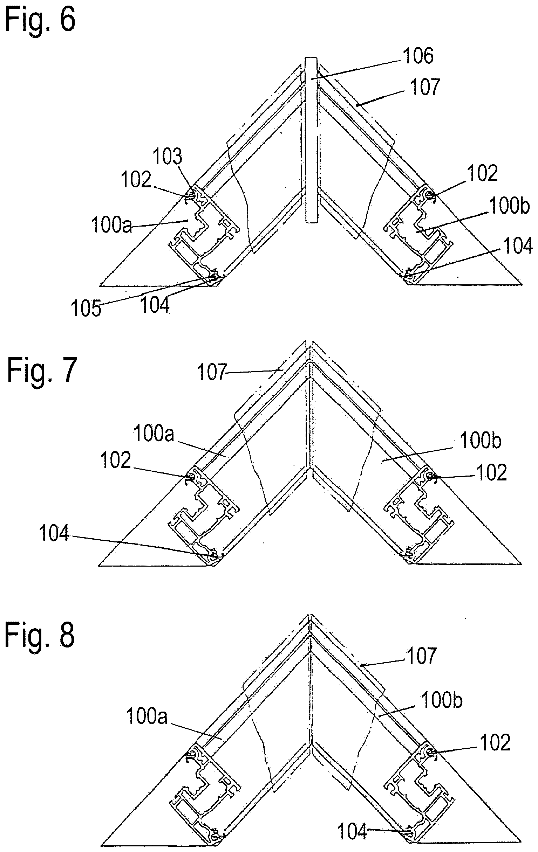

Wie in Figur 6 gezeigt ist, sind die Rahmenprofile 100a, 100b in Aufnahmen 107 gehalten. Die Rahmenprofile 100 werden jeweils an einer Gehrungsfläche an den Schweißspiegel 106 angelegt und erhitzt. Bei Überschreiten der Schmelztemperatur wird das Kunststoffmaterial an den Gehrungsflächen örtlich aufgeschmolzen und daran angrenzende Bereiche des Kunststoffmaterials zumindest in einen teigigen Zustand versetzt. Da die Rahmenprofile 100a, 100b für eine bessere Wärmeübertragung mit einem gewissen Druck an dem Schweißspiegel 106 anliegen, wird das Kunststoffmaterial an der Gehrungsfläche schon teilweise etwas weggedrückt. Dadurch bewegen sich die Kunststoffprofile 100 um eines kurzes Stück (0,5 bis 1,5 mm) auf den Schweißspiegel 106 zu, wobei die in dem jeweiligen Rahmenprofil 100a, 100b gehaltene äußere Dichtung 102 um dieses Stück mittels einer weiter unten beschriebenen Einrichtung in dem Rahmenprofil 100a, 100b parallel zur Haupterstreckungsrichtung L des jeweiligen Rahmenprofils 100a, 100b verschoben wird. Die innere Dichtung 104 kann auf entsprechende Weise in dem jeweiligen Rahmenprofil 100a, 100b verschoben werden, vorliegend wird jedoch nur auf die jeweils äußere Dichtung 102 eingegangen.

Nach dem Erhitzen der Rahmenprofile 100a, 100b an den Gehrungsflächen auf Schweißtemperatur und Entfernen des Schweißspiegels 106 wird gemäß Figur 7 mit dem Zusammenfügen der beiden Rahmenprofile 100a, 100b begonnen. Die erhitzten und deformierbaren Bereiche der Rahmenprofile 100a, 100b erstrecken sich jeweils von den Gehrungsflächen einige Millimeter in die Tiefe. Um eine stabile Schweißverbindung zwischen den beiden Rahmenprofilen 100a, 100b zu erhalten, werden diese derart gegeneinander gedrückt, dass ein Teil des erhitzten Kunststoffmaterials als Schweißzugabe seitlich weggedrückt wird.

In Figur 8 ist die Endstellung der zusammengefügten Rahmenprofile 100a, 100b gezeigt, wobei zwischen den beiden Aufnahmen 107 für die Rahmenprofile 100a, 100b ein kleiner Spalt verbleibt, an dem Schweißraupen ausgebildet sind. Die Dichtungen 102 und 104 werden beim Zusammenfügen der beiden Rahmenprofile 100a, 100b relativ zu den Rahmenprofilen 100a, 100b in Richtung der Haupterstreckungsrichtung L des jeweiligen Rahmenprofils 100a, 100b bewegt und derart gestaucht, dass der durch die Rahmenprofile 100a, 100b beim Zusammenfügen zurückgelegte Weg von etwa 1 bis 4 mm kompensiert wird.

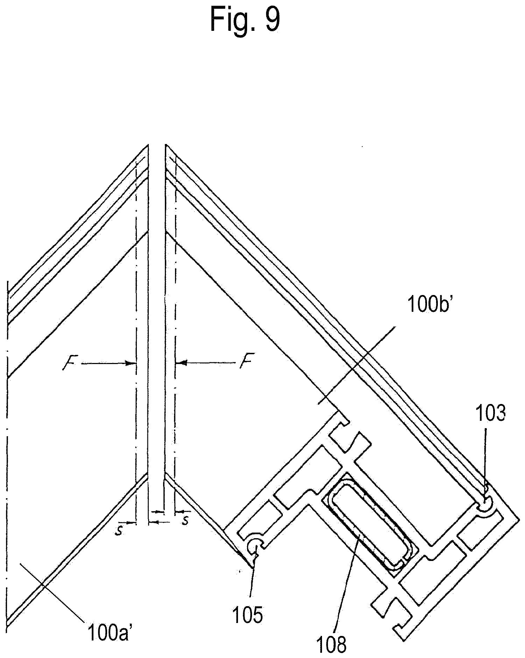

In Figur 9 sind leicht abgewandelte Rahmenprofile 100a', 100b' in vergrößerter Darstellung gezeigt. Das Rahmenprofil 100a', 100b' besitzt jeweils eine äußere Verankerungsnut 3 und eine innere Verankerungsnut 105 für entsprechende Dichtungen und ist jeweils durch ein Verstärkungsrohr 108 besonders steif ausgebildet. Im vorderen Bereich ist das Rahmenprofil 100a', 100b' jeweils auf Gehrung geschnitten. Beim Zusammenfügen zweier Rahmenprofile 100a', 100b' wird das Rahmenprofil 100a', 100b' jeweils um die Schweißzugabe s in der Länge verkürzt. Mit dem Pfeil F ist die Kraft beim Aufheizen des Rahmenprofils 100a', 100b' durch das Andrücken an den Schweißspiegel 106 und später beim Zusammenfügen zweier Rahmenprofile 100a', 100b' dargestellt.

In den Figuren 9, 10 und 11 ist ein Teil einer Vorrichtung zur Durchführung des vorstehend beschriebenen Verfahrens nach der EP 1 072 392 A1 gezeigt.

Die Vorrichtung zum Verschweißen zweier Rahmenprofile 100a, 100b weist für jedes Rahmenprofil 100a, 100b mindestens eine Aufnahme 107 auf, die mit einem beweglichen Schieber 110 versehen ist. Der Schieber 110 weist eine Bodenfläche auf und ist in der Aufnahme 107 durch Führungsprofile längsverschieblich gelagert. Im dargestellten Ausführungsbeispiel sind zur Führung des Schiebers 110 Schrauben fest mit der Aufnahme 107 verbunden, so dass der Schieber 110 durch gebildete Langlöcher in Längsrichtung bewegbar ist.

Im Bereich der Gehrungsfläche ist der Schieber 110 mit einer Vorderwand 111 versehen, die mit der Vorderseite des Schiebers 110 abschließt. Die Vorderwand 111 verläuft zu der Bodenfläche hin schräg gewölbt nach unten. Seitlich zu der Bodenfläche bzw. parallel zur Haupterstreckungsrichtung L des jeweiligen Rahmenprofils 100a, 100b ist eine Seitenwand 113 vorgesehen, die im rechten Winkel zur Bodenfläche angeordnet ist. Zwischen der Seitenwand 113 und der Vorderwand 111 ist eine Ausnehmung 112 vorgesehen.

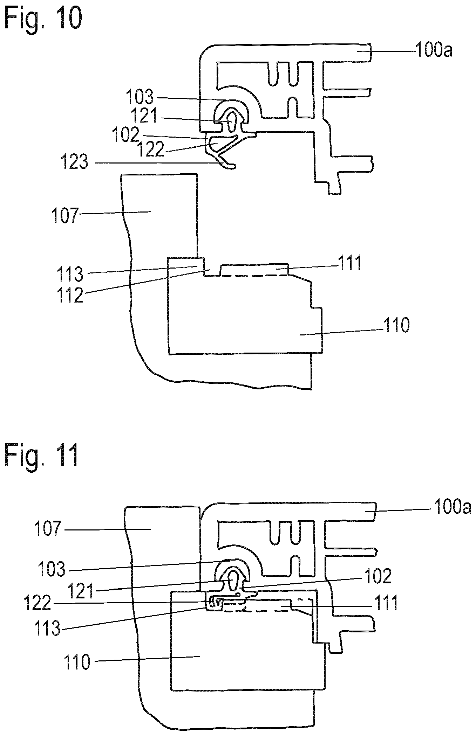

Wie in Figur 10 gezeigt ist, befindet sich die Dichtung 102 vor dem Einfügen in die Aufnahme 107 im entspannten Zustand, so dass eine Dichtlippe 123 vom Rahmenprofil 100a, 100b hervorsteht. Um im Rahmenprofil 100a, 100b fest verankert zu sein, weist die Dichtung 102 einen Befestigungsfuß 121 auf, der als zusammendrückbares Hohlprofil ausgebildet ist. Der Befestigungsfuß 121 ist dabei durch zwei seitliche Schenkel in einer Verankerungsnut gehalten. Damit die Dichtung 102 die Rückstellkräfte über eine lange Zeit halten kann, ist die Dichtung mit einem Hohlraum 122 versehen, der zwischen dem Befestigungsfuß 121 und der Dichtlippe 123 ausgebildet ist.

Für das Zusammenfügen zweier Rahmenprofile 100a, 100b wird das jeweilige Rahmenprofil 100a, 100b auf die Auflage 107 und den Schieber 110 gelegt, wie in Figur 11 gezeigt. Dabei wird der Hohlraum 122 zusammengedrückt und die Dichtlippe 123 liegt auf der Bodenfläche des Schiebers 110 auf. Im vorderen Bereich ist die Dichtlippe 123 durch den schräg verlaufenden Bereich der Vorderwand 111, durch die eine Linienberührung auf der Dichtlippe erreicht wird, noch stärker zusammengedrückt. Die vorderste Spitze der Dichtung 102 ragt in die Ausnehmung 112 ein, so dass die Vorderwand 111 und die Dichtungsspitze in der Ausnehmung 112 im Wesentlichen eine Fläche ausbilden. Die Dichtung 102 liegt ferner an der Seitenwand 113 des Schiebers 110 an, so dass ein seitliches Verbiegen bzw. Ausweichen der Dichtung 102 quer zur Haupterstreckungsrichtung L des jeweiligen Rahmenprofils 100a, 100b verhindert wird.

In der Figur 11 ist ferner mit gestrichelten Linien eine alternative Ausführungsform des Schiebers 110 mit verlängerter Vorderwand 111 dargestellt, bei der die Vorderwand 111 bis zu dem Rahmenprofil 100 herangeführt ist.

Der Schieber 110 ist in dem Halter 107 durch eine Druckfeder vorgespannt. Bei Überwindung der Federkraft wird der Schieber 110 nach hinten in eine Endposition gedrückt.

Zum Verbinden zweier Rahmenprofile 100a, 100b wird in die jeweilige Aufnahme 107 ein Rahmenprofil 100a, 100b gelegt, so dass die Gehrungsfläche des Rahmenprofils 100a, 100b jeweils mit der Vorderseite des Schiebers 110 abschließt. Anschließend wird zwischen zwei jeweils in einer Halterung 107 aufgenommener Rahmenprofile 100a, 100b ein Schweißspiegel 106 eingebracht, der die Gehrungsfläche jedes Rahmenprofils 100a, 100b erhitzt. Durch das örtliche Aufschmelzen des Kunststoffmaterials am Schweißspiegel 106 wird das jeweilige Rahmenprofil 100a, 100b beim Erhitzen schon teilweise in Richtung des Schweißspiegels 106 verschoben. Die Dichtung 102 schmilzt jedoch nicht und wird um die Wegstrecke in dem jeweiligen Rahmenprofil 100a, 100b verschoben, um die das jeweilige Rahmenprofil 100a, 100b zu dem Schweißspiegel 106 bewegt wird.

Zum Zusammenfügen der beiden Rahmenprofile 100a, 100b wird der Schweißspiegel 106 entfernt und die beiden Rahmenprofile 100a, 100b aneinandergedrückt. Dabei werden die Rahmenprofile 100a, 100b jeweils um die Schweißzugabe verkürzt. Beim Zusammenfügen liegen die beiden Vorderseiten der Schieber 110 aneinander an, so dass die Schieber 110 ortsfest bleiben, während die jeweilige Aufnahme 107 mit den Rahmenprofilen 100a, 100b aufeinander zubewegt werden. Dadurch wird eine Relativbewegung zwischen der Dichtung 102 und dem jeweiligen Rahmenprofil 100a, 100b erzeugt. Durch das Zusammendrücken der Dichtung 102 wird dabei gewährleistet, dass das aufgeschmolzene bzw. teigige Kunststoffmaterial nicht in den Dichtungsbereich einfließt bzw. gedrückt wird, sondern weg von der Dichtung 102 gedrückt wird.

In dem dargestellten Ausführungsbeispiel wird die Stauchung der Dichtung 102 im Wesentlichen auf die Länge des Schiebers 110 verteilt, wobei durch die Vorderwand 111 gewährleistet ist, dass der vordere Bereich der Dichtung 102 mit der Gehrungsfläche abschließt.

Alternativ zu dem dargestellten Ausführungsbeispiel kann der Schieber 110 eine Haftoberfläche besitzen. Statt der dargestellten Dichtung können auch andere Dichtungen mit zwei oder mehr Dichtlippen vorgesehen werden. Die Aufnahme 107 wurde nur für die äußere Dichtung 102 näher beschrieben, kann jedoch auch für die innere Dichtung 104 eingesetzt werden.

Der vorstehend beschriebene Stand der Technik wurde im Rahmen der vorliegenden Erfindung geändert. Denn um auch ein Verschweißen von Dichtungen bzw. der Dichtungen zu ermöglichen, ist im Rahmen der vorliegenden Erfindung vorteilhaft vorgesehen, als Dichtungswerkstoff einen elastomeren Kunststoffwerkstoff auf Kautschukbasis, wie z.B. Chlorbutadien-Kautschuk (CR) oder Ethylen-Propylen-Dien-Kautschuk (EPDM) oder ein anderes geeignetes Elastomer auf Kautschukbasis zu verwenden, um den Vorteil von dauerhaft besseren Elastizitäts- und damit dauerhaft besseren Dichtungseigenschaften dieser Werkstoffe im Vergleich zu thermoplastischen Elastomeren (TPE) zu nutzen. In dem elastomeren Kunststoffwerkstoff sind Zonen z.B. in Form von Einlegestreifen aus einem zweiten, thermoplastischen und damit verschweißbaren Kunststoffwerkstoff integriert. Dadurch ist vorteilhaft für eine bessere Verschweißbarkeit einer solchen Dichtung 2 bzw. 4 gesorgt.

Für das Verfahren und für die erfinderische Vorrichtung zur Durchführung dieses Verfahrens kann weitgehend der Aufbau der Vorrichtung nach dem Stand der Technik EP 1 072 392 A1 verwendet werden. Jedoch ist für das Verfahren kein relativ zur Aufnahme 107 beweglicher Schieber 110 erforderlich.

Das den Schieber 110 nach der EP 1 072 392 A1 ersetzende Bauteil ist nachfolgend beispielhaft ein Dichtungs-Halteabschnitt 10 der Aufnahme 7. Dieser kann, muss aber nicht mehr separat zur Aufnahme und/oder an dieser verschieblich ausgebildet sein. Ist er beides, dient die Längsverschiebbarkeit zur genauen Justage bzw. Einstellung des Dichtungs-Halteabschnittes 10 auf der Aufnahme 7 im Rahmen einer Vormontage der Vorrichtung vor dem Durchführen des Verfahrens.

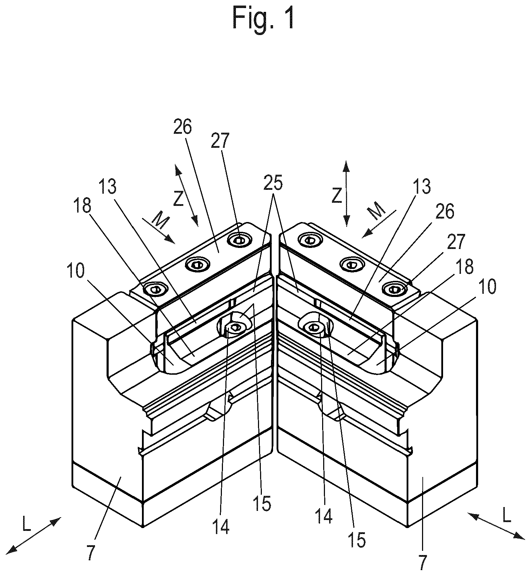

In Fig. 1 sind die Aufnahmen 7 der erfinderischen Vorrichtung räumlich in Schweißposition dargestellt. Zur besseren Übersichtlichkeit sind die Rahmenprofile 1a, 1b und der Schweißspiegel 106 nicht dargestellt.
Die Vorrichtung zum Verschweißen zweier Rahmenprofile 1a, 1b weist für jedes Rahmenprofil 1a, 1b mindestens die Aufnahme 7 auf, die mit der für Justage- bzw. Einstellzwecke auf der Aufnahme 7 verschiebbaren, ansonsten jedoch durch Schrauben 14 fest auf der Aufnahme 7 fixierten Zulage 10 als Dichtungs-Halteabschnitt versehen ist. Der Dichtungs-Halteabschnitt 10 weist eine Bodenfläche 18 auf. Die Zulage ist hier zur Justage in der Aufnahme 7 durch Führungsprofile längsverschieblich bzw. parallel zur Haupterstreckungsrichtung L des jeweiligen Rahmenprofils 1a, 1b gelagert. Im dargestellten Ausführungsbeispiel ist zur Fixierung des Dichtungs-Halteabschnittes 10 diese fest mit Schrauben 14 mit der Aufnahme 7 verbunden, so dass der Dichtungs-Halteabschnitt10 durch gebildete Langlöcher 15 in Längsrichtung bzw. parallel zur Haupterstreckungsrichtung L des zugehörigen Rahmenprofils 1a, 1b relativ zur Aufnahme 7 einstellbar bzw. justierbar ist.

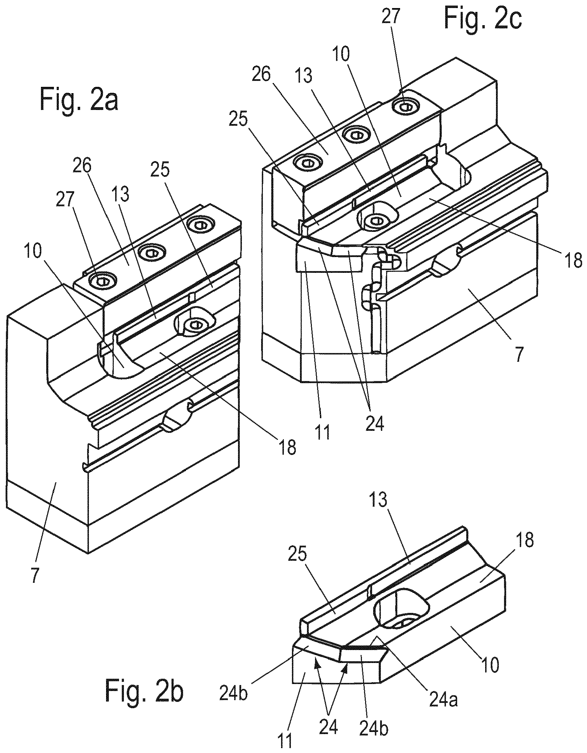

Im Bereich der Gehrungsfläche ist der Dichtungs-Halteabschnitt 10 mit einer Abschrägung 24 versehen, die einer Aufnahmekontur des Dichtungs-Halteabschnittes 10 für das Rahmenprofil 1a, 1b folgt. (siehe z.B. Fig. 2b, 2c).

Seitlich zu der Bodenfläche 18 ist eine Seitenwand 13 vorgesehen, die sich parallel zur Haupterstreckungsrichtung L des jeweiligen Rahmenprofils 1a, 1b erstreckt und die im rechten Winkel zur Bodenfläche 18 angeordnet ist. Die Seitenwand 13 ist zur Fixierung jeweiligen der Dichtung 2, 4 in der Vorrichtung vorgesehen. Dazu wird die jeweilige Dichtung 2, 4 durch die Seitenwand 13 leicht vorpositioniert und vorzugsweise auch (etwas) vorkomprimiert. Die Seitenwand 13 weist einen Vorstand; insbesondere eine Aufdickung 25 auf, die in Richtung M senkrecht zur Haupterstreckungsrichtung L des jeweiligen Rahmenprofils 1a, 1b von der Seitenwand 13 vorsteht. Durch die Aufdickung 25 wird die Dichtung 2 über eine Flächenberührung stärker komprimiert als durch die Seitenwand 13. An dem Dichtungs-Halteabschnitt 10 sind also vorzugsweise wenigstens zwei Bereiche ausgebildet, an denen die Dichtung 2 unterschiedlich stark vorpositioniert und vorzugsweise auch komprimiert wird. Die Dichtungen 2, 4 weisen vorzugsweise einen identischen Querschnitt auf, damit sie gut verschweißbar sind.

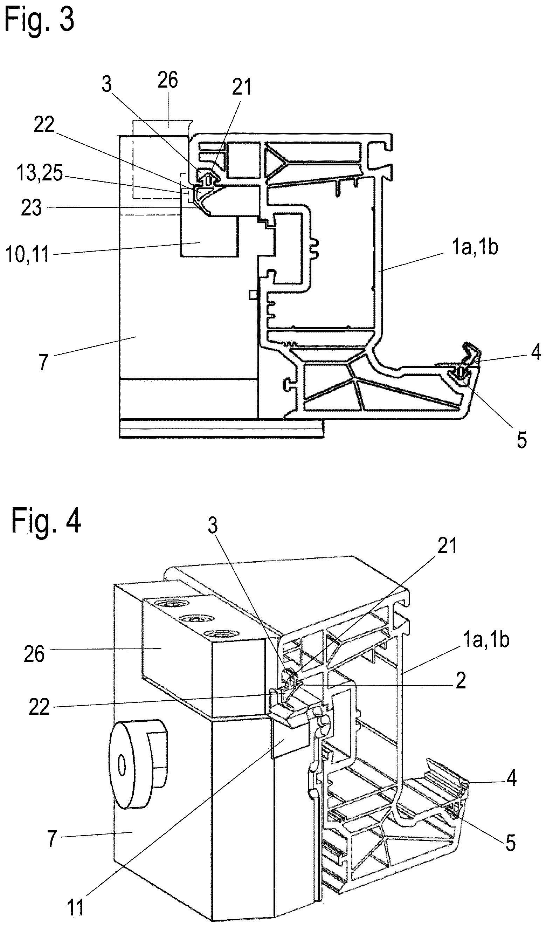

Die Aufnahme 7 weist ferner jeweils einen Anschlag 26 auf. Der Anschlag 26 ist mit Schrauben 27 vertikal bzw. in Richtung N über Federn (hier nicht dargestellt) beweglich an der Aufnahme 7 befestigt. Der Anschlag 26 dient der vertikalen Positionierung des jeweiligen Rahmenprofils 1a, 1b in der Aufnahme 7. Die Position des Anschlags 26 relativ zur Aufnahme 7 in vertikaler Richtung kann über einen Mechanismus eingestellt werden. Von diesem Mechanismus ist in Fig. 4 eine Einstellschraube dargestellt. Dadurch kann die Vorrichtung in vertikaler Richtung vorteilhaft auf verschiedene Rahmenprofile 1a, 1b angepasst werden.

In Fig. 2b ist der Dichtungs-Halteabschnitt 10 der Vorrichtung dargestellt. Gut erkennbar ist die Aufdickung 25 der Seitenwand 13.

Ebenfalls gut erkennbar ist die Abschrägung 24, die der Aufnahmekontur des Dichtungs-Halteabschnittes 10 für das jeweilige Rahmenprofil 1a, 1b folgt. Genauer betrachtet weist die Abschrägung 24 zwei Abschrägungsflanken 24a, 24b auf, die so zueinander angeordnet sind, dass sie in Bezug auf die Vorderwand 11 des Dichtungs-Halteabschnittes 10 eine vertiefte, prismenartige Abschrägungsgeometrie bilden.

In Fig. 3 ist eine Vorderansicht im Schnitt der erfinderischen Vorrichtung mit eingelegtem Rahmenprofil 1a dargestellt.

Das freie Ende der Dichtlippe 23 liegt auf der Bodenfläche 18 des Dichtungs-Halteabschnittes 10 auf. Die Dichtlippe 23 stützt sich ferner am konturierten Bereich des Dichtungs-Halteabschnittes 10 ab, so dass die Dichtung 2 zwar geklemmt bzw. auf dem Dichtungs-Halteabschnitt 10 festgelegt wird, der Hohlraum 22 der Dichtung 2 aber im Gehrungsbereich erhalten bleibt und nicht vollständig zusammengedrückt wird. Dadurch bleiben die Elastizität und damit die Dichtwirkung der Dichtung 2 vorteilhaft auch im Gehrungs- bzw. Eckbereich erhalten.

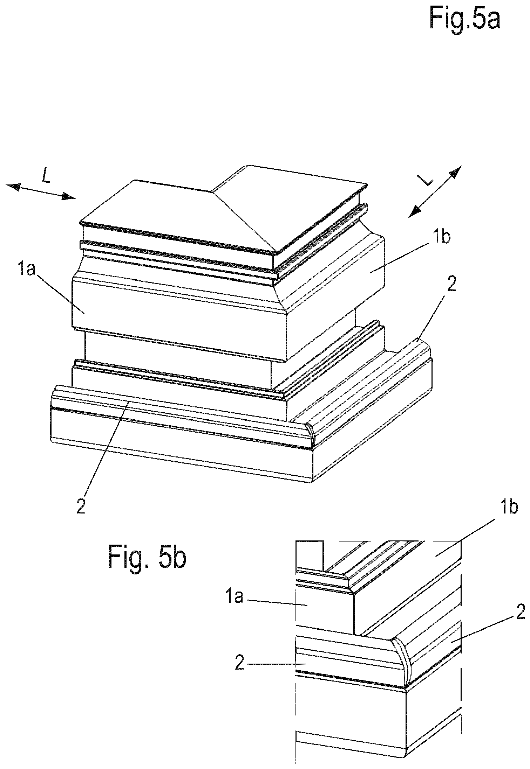

Für das Zusammenfügen zweier Rahmenprofile 1a, 1b wird das jeweilige Rahmenprofil 1a, 1b auf die Auflage 7 und der Dichtungs-Halteabschnitt 10 gelegt, wie in Fig.3 gezeigt ist. Durch die Gestaltung der Vorderwand 11 des Dichtungs-Halteabschnittes 10 mit der Abschrägung 24 und der bereichsweisen Aufdickung 25 der Seitenwand 13 des Dichtungs-Halteabschnittes 10, wird die Dichtung 2 im Bereich der Aufdickung 25 über eine Flächenberührung an das jeweilige Rahmenprofil 1a, 1b und während des Zustellvorganges der Auflagen 7 beim Verschweißen der Rahmenprofile 1a, 1b an der Gehrungsspitze vorteilhaft so präzise festgelegt bzw. gepresst, dass während des Verschiebens der Rahmenprofile 1a, 1b aufeinander zu das Dichtungsmaterial vom Verschweißungsquerschnitt der Dichtung 2 in Richtung der Winkelhalbierende des Gehrungswinkel (hier beispielhaft 90°) nach außen, d.h. in Richtung der resultierenden Bewegungsrichtung der beiden Rahmenprofile 1a, 1b gedrückt wird (siehe auch Fig. 4 und insbesondere Fig. 5a und Fig. 5b).

Die Verschweißung der beiden Dichtungen 2, 4 erfolgt nur durch das Aufeinanderpressen der Querschnittsflächen der Dichtungen 2, 4. Der Wirkungsbereich in der Tiefe der Verschweißung der Dichtungen 2, 4 jeweils in Längsrichtung der Profile liegt hierbei besonders bevorzugt bei 0,05 mm bis 1,5 mm. Möglich sind aber auch je nach gewähltem Elastomermaterial auch 0,05 mm bis ca. 2,5 mm.

Durch das Drücken des Dichtungsmaterials in Richtung der Winkelhalbierende des Gehrungswinkel bzw. in Richtung der resultierenden Bewegungsrichtung der beiden Rahmenprofile 1a, 1b beim Verschweißen der Dichtungen 2 ergibt sich im Zusammenspiel mit dem gewählten Werkstoff der Dichtungen 2 vorteilhaft keine fehlerhafte Verschweißung sondern nur ein geometrisch definierter, entfernbarer Schweißüberstand der Dichtungen 2 außerhalb des Hohlraumes 22 durch die Längenzugabe der Rahmenprofile 1. Dieser Schweißüberstand kann deshalb einfach und damit vorteilhaft z. B. durch Abtrennen, Schneiden oder Fräsen von den verschweißten Dichtungen 2 entfernt werden, ohne die Dichtwirkung der Dichtungen 2, 4 zu beeinträchtigen (siehe Fig. 5a und Fig. 5b).

Es entsteht dadurch eine Gehrungsverschweißung der Dichtungen 2 mit einer vorteilhaft verbesserten Dichtwirkung im Gehrungsbereich sowie mit einem geometrisch definierten Schweißüberstand, der dadurch vorteilhaft einfach entfernbar ist.

Statt der dargestellten Dichtung 2 können auch andere Dichtungen mit zwei oder mehr Dichtlippen vorgesehen werden. Die Aufnahme 7 wurde nur für die äußere Dichtung 2 näher beschrieben, kann jedoch auch für die innere Dichtung 4 eingesetzt werden.

### Bezugszeichenliste

- 100a, 100b, 100a', 100b': Rahmenprofil (Stand der Technik)
- 1a, 1b: Rahmenprofil
- 2, 102: Dichtung
- 3, 103: Verankerungsnut
- 4,104: Dichtung
- 5, 105: Verankerungsnut
- 106: Schweißspiegel
- 7, 107: Aufnahme
- 8, 108: Verstärkungsrohr
- 9 10: Dichtungs-Halteabschnitt
- 110: Schieber
- 11, 111: Vorderwand
- 12, 112: Ausnehmung
- 13, 113: Seitenwand
- 14: Schraube
- 15: Langloch
- 17 18: Bodenfläche
- 19 20 21, 121: Befestigungsfuß
- 22, 122: Hohlraum
- 23, 123: Dichtlippe
- 24: Abschrägung
- 24a: Abschrägungsflanke
- 24b: Abschrägungsflanke
- 25: Aufdickung
- 26: Anschlag
- 27: Schrauben

- L: Haupterstreckungsrichtung

## Patentansprüche

1. Vorrichtung, mit der jeweils auf Gehrung geschnittene Rahmenprofile (1a, 1b) und in die Rahmenprofile eingesetzte, sich längs der Rahmenprofile erstreckende Dichtungen (2, 4) miteinander im Gehrungsbereich verschweißbar sind, wobei die Rahmenprofile aus Kunststoff bestehen und wobei die Dichtungen aus einem elastischen Kunststoffwerkstoff bestehen und mindestens einen Dichtbereich (23) aufweisen, mit
a. zwei Aufnahmen (7), in denen jeweils eines der Rahmenprofile (1a, 1b) mit mindestens einer der Dichtungen (2, 4) gehalten ist,
b. einer Heizeinrichtung (106) zum Aufheizen der Rahmenprofile (1a, 1b) und der Dichtungen (2, 4) auf Schweißtemperatur,
c. wobei an jeder Aufnahme (7) ein Dichtungs-Halteabschnitt (10) zum Halten jeweils einer der Dichtungen (2, 4) vorgesehen ist, und
d. wobei der Dichtungs-Halteabschnitt (10) eine Seitenwand (13) zur Anlage und zur Vorpositionierung und/oder Vorkomprimierung der Dichtung (2, 4) aufweist,
e. wobei die Seitenwand (13) einen Vorstand, insbesondere eine Aufdickung (25), aufweist, die in einer Richtung (M) senkrecht zu einer Haupterstreckungsrichtung (L) des jeweiligen Rahmenprofils (1a, 1b) von der Seitenwand vorsteht,
**dadurch gekennzeichnet, dass**
f. sich der Vorstand, insbesondere die Aufdickung (25), des Dichtungs-Halteabschnittes (10) ausgehend von der Gehrungsnaht entlang der Profillängsachse (L) über 1,5 mm bis 80 mm erstreckt,
g. einer oder beide Dichtungs-Halteabschnitte (10) als an der Aufnahme (7) befestigte Zulage ausgebildet ist/sind, wobei die Zulagen in Längsrichtung des zugehörigen Rahmenprofils (1a, 1b) auf der Aufnahme (7) justierbar sind und ansonsten fest auf der Aufnahme (7) fixiert sind.

2. Vorrichtung nach Anspruch 1, **dadurch gekennzeichnet, dass** sich der Vorstand, insbesondere die Aufdickung (25), des Dichtungs-Halteabschnittes (10) von der Gehrungsnaht entlang der Profillängsachse (L) über 1,5 bis 30 mm erstreckt.

3. Vorrichtung nach Anspruch 2, **dadurch gekennzeichnet, dass** der Vorstand, insbesondere die Aufdickung (25), des Dichtungs-Halteabschnittes (10) eine Dicke zwischen 0,15 mm und 3 mm, vorzugsweise zwischen 0,4 mm und 1,5 mm aufweist.

4. Vorrichtung nach einem der vorstehenden Ansprüche, **dadurch gekennzeichnet, dass** der Dichtungs-Halteabschnitt (10) im Bereich einer Gehrungsfläche mit einer Abschrägung (24) versehen ist, die einer Aufnahmekontur des Dichtungs-Halteabschnittes (10) für das Rahmenprofil (1) folgt.

5. Vorrichtung nach einem der vorstehenden Ansprüche, **dadurch gekennzeichnet, dass** die Abschrägung (24) zwei Abschrägungsflanken (24a, 24b) aufweist, wobei die Abschrägungsflanken (24a, 24b) vorzugsweise so zueinander angeordnet sind, dass sie in Bezug auf eine Vorderwand (11) des Dichtungs-Halteabschnittes (10) eine vertiefte, prismenartige Abschrägungsgeometrie bilden.

6. Vorrichtung nach einem der Ansprüche 1 bis 5, **dadurch gekennzeichnet, dass** die Aufnahmen (7) jeweils einen Anschlag (26) aufweisen, wobei der Anschlag (26) vorzugsweise mit Schrauben (27) in vertikaler Richtung über Federn beweglich an der jeweiligen Aufnahme (7) befestigt ist.

7. Vorrichtung nach einem der vorstehenden Ansprüche, **dadurch gekennzeichnet, dass** die Dichtungen (2, 4) mindestens einen Hohlraum (22) und/oder einen Befestigungsfuß aufweisen.

8. Vorrichtung nach einem der vorstehenden Ansprüche, **dadurch gekennzeichnet, dass** an dem Dichtungs-Halteabschnitt (10) wenigstens zwei Bereiche ausgebildet sind, in denen die jeweilige Dichtung (2, 4) unterschiedlich komprimierbar ist.

9. Verfahren, mit dem jeweils auf Gehrung geschnittene Rahmenprofile (1a, 1b) und in die Rahmenprofile eingesetzte, sich längs der Rahmenprofile erstreckende Dichtungen (2, 4) miteinander in einem Gehrungsbereich unter einem Gehrungswinkel mit einer Vorrichtung nach einem der Ansprüche 1 bis 8 verschweißt werden, wobei die Rahmenprofile aus einem elastischen Kunststoffwerkstoff bestehen und die Dichtungen mindestens einen Dichtbereich (23) aufweisen, mit folgenden Schritten:
a. Bereitstellen einer Vorrichtung nach einem der Ansprüche 1 bis 8,
b. Bereitstellen der zwei Rahmenprofile (1a, 1b) mit den zwei daran angeordneten Dichtungen (2, 4) und Anordnen der zwei Rahmenprofile (1a, 1b) auf der Vorrichtung,
c. Aufheizen der Gehrungsflächen der Rahmenprofilbereiche durch eine Heizeinrichtung (106) auf eine Verschweißungstemperatur und Aufheizen der Gehrungsflächen der Dichtungen (2, 4),
d. Entfernen der Heizeinrichtung (106) aus dem Bereich der Gehrungsflächen,
e. Zusammenpressen und Verschweißen der Gehrungsflächen der Rahmenprofile (1a, 1b),
f. Verschweißen der Dichtungen (2, 4) durch ein Aufeinanderpressen der Querschnittsoberflächen der Dichtungen (2, 4), wobei die Dichtungen (2, 4) jeweils durch eine Seitenwand (13) eines Dichtungs-Halteabschnitt (10) senkrecht zur Haupterstreckungsrichtung (L) der Rahmenprofile (1a, 1b) vorpositioniert und/oder vorkomprimiert werden,
g. wobei das Dichtungsmaterial vom Verschweißungsquerschnitt der jeweiligen Dichtung (2, 4) durch einen Vorstand, insbesondere eine Aufdickung (25), senkrecht zur Haupterstreckungsrichtung (L) vorkomprimiert wird oder ergänzend zur Seitenwand komprimiert wird,
h. so dass während des Verschiebens der Rahmenprofile (1a, 1b) aufeinander zu das Dichtungsmaterial vom Verschweißungsquerschnitt der jeweiligen Dichtung (2, 4) in Richtung einer Winkelhalbierenden des Gehrungswinkels nach außen gedrückt wird,

10. Verfahren nach Anspruch 9, **dadurch gekennzeichnet, dass** der Schweißüberstand entfernt wird, derart, dass die zusammengeschweißten Dichtungen (2, 4) dort, wo der Schweißüberstand entfernt worden ist, eine Dichtecke mit geschlossener Außenkontur ausbilden.

11. Verfahren nach Anspruch 9 oder 10, **dadurch gekennzeichnet, dass** die Dichtungen wenigstens einen Hohlraum und/oder einen Befestigungsfuß aufweisen und dass das Verschweißen der Dichtungen (2, 4) derart erfolgt, dass im Gehrungsbereich der Hohlraum (22) der Dichtung (2, 4) ganz oder teilweise erhalten bleibt.

12. Verfahren nach einem der vorgenannten Ansprüche 9 bis 11, **dadurch gekennzeichnet, dass** der Wirkungsbereich in der Tiefe der Verschweißung der Dichtungen (2, 4) bevorzugt zwischen 0,05 mm bis 2,5 mm liegt und besonders bevorzugt zwischen 0,05 mm bis 1,5 mm liegt.

13. Verfahren nach einem der vorgenannten Ansprüche 9 bis 12, **dadurch gekennzeichnet, dass** der Kunststoffwerkstoff, aus dem die Dichtungen bestehen, ein elastischer erster Kunststoff ist, in dem Bereiche aus einem verschweißbaren zweiten Kunststoff eingebettet sind.

14. Verfahren nach einem der vorgenannten Ansprüche 9 bis 13, **dadurch gekennzeichnet, dass** der Kunststoffwerkstoff, aus dem die Dichtungen bestehen, ein Elastomer auf der Basis von Chlorbutadien-Kautschuk (CR) oder auf der Basis von Ethylen-Propylen-Dien-Kautschuk (EPDM) oder einem Elastomer auf der Basis eines anderen Kautschuks als erster Kunststoff ist, wobei in den elastomeren Kunststoffwerkstoff Bereiche aus einem thermoplastischen und damit verschweißbaren zweiten Kunststoff integriert sind.

## Claims

1. Apparatus, by which frame profiles (1a, 1b) which have in each case been mitre-cut and seals (2, 4) which have been inserted in the frame profiles and which extend along the frame profiles can be welded to one another in the mitre region, wherein the frame profiles are made of plastic, and wherein the seals are made of an elastic plastic material and have at least one sealing region (23), said apparatus comprising
a. two receiving means (7), in which in each case one of the frame profiles (1a, 1b) with at least one of the seals (2, 4) is held,
b. a heating device (106) for heating the frame profiles (1a, 1b) and the seals (2, 4) to a welding temperature,
c. wherein a seal-holding portion (10) for holding in each case one of the seals (2, 4) is provided on each receiving means (7), and
d. wherein the seal-holding portion (10) has a side wall (13) for supporting and for pre-positioning and/or pre-compressing the seal (2, 4),
e. wherein the side wall (13) has a protrusion, in particular a thickening (25), which protrudes from the side wall in a direction (M) perpendicular to a main direction of extension (L) of the respective frame profile (1a, 1b),
**characterized in that**
f. the protrusion, in particular the thickening (25), of the seal-holding portion (10) extends along the profile longitudinal axis (L) over 1.5 mm to 80 mm starting from the mitre joint,
g. one or both seal-holding portions (10) is/are configured as an add-on which is fastened to the receiving means (7), wherein the add-ons are adjustable on the receiving means (7) in the longitudinal direction of the associated frame profile (1a, 1b) and otherwise are securely fixed to the receiving means (7).

2. Apparatus according to claim 1, **characterized in that** the protrusion, in particular the thickening (25), of the seal-holding portion (10) extends along the profile longitudinal axis (L) over 1.5 to 30 mm starting from the mitre joint.

3. Apparatus according to claim 2, **characterized in that** the protrusion, in particular the thickening (25), of the seal-holding portion (10) has a thickness between 0.15 mm and 3 mm, preferably between 0.4 mm and 1.5 mm.

4. Apparatus according to any one of the preceding claims, **characterized in that** the seal-holding portion (10) is provided with a bevel (24) in the region of a mitre surface, said bevel following a receiving contour of the seal-holding portion (10) for the frame profile (1).

5. Apparatus according to any one of the preceding claims, **characterized in that** the bevel (24) has two bevel flanks (24a, 24b), wherein the bevel flanks (24a, 24b) are preferably arranged relative to one another such that they form a recessed, prism-like bevel geometry in relation to a front wall (11) of the seal-holding portion (10).

6. Apparatus according to any one of claims 1 to 5, **characterized in that** the receiving means (7) in each case have a stop (26), wherein the stop (26) is preferably fastened to the respective receiving means (7) by screws (27) in such a way as to be movable in the vertical direction via springs.

7. Apparatus according to any one of the preceding claims, **characterized in that** the seals (2, 4) have at least one cavity (22) and/or one fastening foot.

8. Apparatus according to any one of the preceding claims, **characterized in that** at least two regions in which the respective seal (2, 4) can be compressed differently are formed on the seal-holding portion (10).

9. Method, by which frame profiles (1a, 1b) which have in each case been mitre-cut and seals (2, 4) which have been inserted in the frame profiles and which extend along the frame profiles are welded to one another in a mitre region at a mitre angle using an apparatus according to any one of claims 1 to 8, wherein the frame profiles are made of an elastic plastic material and the seals have at least one sealing region (23), said method comprising the following steps:
a. providing an apparatus according to any one of claims 1 to 8,
b. providing the two frame profiles (1a, 1b) with the two seals (2, 4) arranged thereon and arranging the two frame profiles (1a, 1b) on the apparatus,
c. heating the mitre surfaces of the frame profile regions to a welding temperature by means of a heating device (106) and heating the mitre surfaces of the seals (2, 4),
d. removing the heating device (106) from the region of the mitre surfaces,
e. pressing together and welding the mitre surfaces of the frame profiles (1a, 1b),
f. welding the seals (2, 4) by pressing together the cross-sectional surfaces of the seals (2, 4), wherein the seals (2, 4) are in each case pre-positioned and/or pre-compressed by a side wall (13) of a seal-holding portion (10) perpendicular to the main direction of extension (L) of the frame profiles (1a, 1b),
g. wherein the seal material is pre-compressed from the welding cross-section of the respective seal (2, 4) or is compressed in a manner supplementary to the side wall by a protrusion, in particular a thickening (25), perpendicular to the main direction of extension (L),
h. so that, as the frame profiles (1a, 1b) are moved towards one another, the seal material is pressed outwards from the welding cross-section of the respective seal (2, 4) in the direction of a bisector of the mitre angle.

10. Method according to claim 9, **characterized in that** the welding overhang is removed such that the seals (2, 4) which have been welded together form a sealed corner with a closed outer contour at the point where the welding overhang has been removed.

11. Method according to claim 9 or 10, **characterized in that** the seals have at least one cavity and/or one fastening foot, and **in that** the welding of the seals (2, 4) takes place in such a way that the cavity (22) of the seal (2, 4) is entirely or partially maintained in the mitre region.

12. Method according to any one of the preceding claims 9 to 11, **characterized in that** the effective range in terms of the depth of welding of the seals (2, 4) is preferably between 0.05 mm to 2.5 mm and particularly preferably between 0.05 mm to 1.5 mm.

13. Method according to any one of the preceding claims 9 to 12, **characterized in that** the plastic material of which the seals are made is an elastic first plastic, in which regions made of a weldable second plastic are embedded.

14. Method according to any one of the preceding claims 9 to 13, **characterized in that** the plastic material of which the seals are made is an elastomer based on chlorobutadiene rubber (CR) or based on ethylene propylene diene rubber (EPDM) or an elastomer based on a different rubber as the first plastic, wherein regions made of a thermoplastic and thus weldable second plastic are integrated in the elastomeric plastic material.

## Revendications

1. Dispositif avec lequel des profilés de cadre (1a, 1b) coupés en onglet et des joints d'étanchéité (2, 4) insérés dans les profilés de cadre et s'étendant le long des profilés de cadre peuvent être soudés ensemble dans la zone d'onglet, les profilés de cadre étant constitués de matière plastique et les joints d'étanchéité étant constitués d'une matière plastique élastique et présentant au moins une zone d'étanchéité (23), avec
a. deux logements (7) dans chacun desquels l'un des profilés de cadre (1a, 1b) muni d'au moins l'un des joints d'étanchéité (2, 4) est maintenu,
b. un dispositif de chauffage (106) pour chauffer les profilés de cadre (1a, 1b) et les joints d'étanchéité (2, 4) à la température de soudage,
c. sur chaque logement (7) est prévue une partie de maintien de joint d'étanchéité (10) pour maintenir chaque fois l'un des joints d'étanchéité (2, 4) et
d. la partie de maintien de joint d'étanchéité (10) présentant une paroi latérale (13) pour mettre en contact et pour prépositionner et/ou précomprimer le joint d'étanchéité (2, 4),
e. la paroi latérale (13) présentant une saillie, en particulier un épaississement (25), qui fait saillie de la paroi latérale dans une direction (M) perpendiculaire à une direction d'extension principale (L) du profilé de cadre respectif (1a, 1b),
**caractérisé en ce que**
f. la saillie, en particulier l'épaississement (25) de la partie de maintien de joint d'étanchéité (10) s'étend sur 1,5 mm à 80 mm le long de l'axe longitudinal de profilé (L) à partir du joint en onglet,
g. une ou les deux parties de maintien de joint d'étanchéité (10) est/sont réalisée(s) sous la forme d'ajouts fixés au logement (7), les ajouts étant réglables dans la direction longitudinale du profilé de cadre associé (1a, 1b) sur le logement (7) et étant autrement fermement fixés au logement (7).

2. Dispositif selon la revendication 1, **caractérisé en ce que** la saillie, en particulier l'épaississement (25), de la partie de maintien de joint d'étanchéité (10) s'étend sur 1,5 à 30 mm le long de l'axe longitudinal de profilé (L) à partir du joint en onglet.

3. Dispositif selon la revendication 2, **caractérisé en ce que** la saillie, en particulier l'épaississement (25), de la partie de maintien de joint d'étanchéité (10) présente une épaisseur comprise entre 0,15 mm et 3 mm, de préférence entre 0,4 mm et 1,5 mm.

4. Dispositif selon l'une des revendications précédentes, **caractérisé en ce que** la partie de maintien de joint d'étanchéité (10) est pourvue, dans la zone d'une surface en onglet, d'un chanfrein (24) qui suit un contour de logement de la partie de maintien de joint d'étanchéité (10) pour le profilé de cadre (1).

5. Dispositif selon l'une des revendications précédentes, **caractérisé en ce que** le chanfrein (24) comporte deux flancs de chanfrein (24a, 24b), les flancs de chanfrein (24a, 24b) étant de préférence disposés l'un par rapport à l'autre de manière à former une géométrie de chanfrein prismatique en retrait par rapport à une paroi avant (11) de la partie de maintien de joint d'étanchéité (10).

6. Dispositif selon l'une des revendications 1 à 5, **caractérisé en ce que** les logements (7) présentent chacun une butée (26), la butée (26) étant fixée sur le logement respectif (7) de manière à pouvoir être déplacée dans la direction verticale par des ressorts, de préférence au moyen de vis (27).

7. Dispositif selon l'une des revendications précédentes, **caractérisé en ce que** les joints d'étanchéité (2, 4) présentent au moins une cavité (22) et/ou un pied de fixation.

8. Dispositif selon l'une des revendications précédentes, **caractérisé en ce qu'**au moins deux zones dans lesquelles le joint d'étanchéité respectif (2, 4) peut être comprimé de manière différente sont formées sur la partie de maintien de joint d'étanchéité (10).

9. Procédé par lequel des profilés de cadre (1a, 1b) coupés en onglet et des joints d'étanchéité (2, 4) insérés dans les profilés de cadre et s'étendant le long des profilés de cadre sont soudés ensemble dans une zone d'onglet avec un dispositif selon l'une des revendications 1 à 8, les profilés de cadre étant constitués d'une matière plastique élastique et les joints d'étanchéité présentant au moins une zone d'étanchéité (23), avec les étapes suivantes consistant à :
a. mettre à disposition un dispositif selon l'une des revendications 1 à 8,
b. mettre à disposition les deux profilés de cadre (1a, 1b) avec les deux joints d'étanchéité (2, 4) disposés sur ceux-ci et disposer les deux profilés de cadre (1a, 1b) sur le dispositif,
c. chauffer les surfaces en onglet des zones de profilé de cadre par un dispositif de chauffage (106) à une température de soudage et chauffer les surfaces en onglet des joints d'étanchéité (2, 4),
d. enlever le dispositif de chauffage (106) de la zone des surfaces en onglet,
e. comprimer et souder les surfaces en onglet des profilés de cadre (1a, 1b),
f. souder les joints d'étanchéité (2, 4) en pressant l'une sur l'autre les surfaces de section transversale des joints d'étanchéité (2, 4), les joints d'étanchéité (2, 4) étant chacun prépositionnés et/ou précomprimés perpendiculairement à la direction d'extension principale (L) des profilés de cadre (1a, 1b) par une paroi latérale (13) d'une partie de maintien de joint d'étanchéité (10),
g. le matériau d'étanchéité, à partir de la section transversale de soudage du joint d'étanchéité respectif (2, 4), étant précomprimé par une saillie, en particulier un épaississement (25), perpendiculairement à la direction d'extension principale (L) ou comprimé en complément vers la paroi latérale,
h. de sorte que pendant le déplacement des profilés de cadre (1a, 1b) l'un vers l'autre, le matériau d'étanchéité, à partir de la section transversale de soudage du joint d'étanchéité respectif (2, 4), est pressé vers l'extérieur dans la direction d'une bissectrice de l'angle d'onglet.

10. Procédé selon la revendication 9, **caractérisé en ce que** le dépassement de soudure est enlevé de telle sorte que les joints d'étanchéité soudés (2, 4) forment, là où le dépassement de soudure a été enlevé, un coin d'étanchéité avec un contour extérieur fermé.

11. Procédé selon la revendication 9 ou 10, **caractérisé en ce que** les joints d'étanchéité présentent au moins une cavité et/ou un pied de fixation et que le soudage des joints d'étanchéité (2, 4) est effectué de telle sorte que la cavité (22) du joint d'étanchéité (2, 4) est préservée en totalité ou en partie dans la zone d'onglet.

12. Procédé selon l'une des revendications 9 à 11 précitées, **caractérisé en ce que** la zone d'action en profondeur du soudage des joints d'étanchéité (2, 4) est de préférence comprise entre 0,05 mm et 2,5 mm et particulièrement de préférence entre 0,05 mm et 1,5 mm.

13. Procédé selon l'une des revendications 9 à 12 précitées, **caractérisé en ce que** la matière plastique dont sont constitués les joints d'étanchéité est une première matière plastique élastique dans laquelle sont incorporées des zones constituées d'une seconde matière plastique soudable.

14. Procédé selon l'une des revendications 9 à 13 précitées, **caractérisé en ce que** la matière plastique dont sont constitués les joints d'étanchéité est un élastomère à base de caoutchouc chlorobutadiène (CR) ou à base de caoutchouc éthylène-propylène-diène (EPDM) ou un élastomère à base d'un caoutchouc autre que la première matière plastique, des zones constituées d'une seconde matière plastique thermoplastique et donc soudable étant intégrées dans la matière plastique élastomère.
